**Europäisches Patentamt**

**European Patent Office**

**Office européen des brevets**

(19)

(11) Veröffentlichungsnummer: **0 242 592**
**A2**

(12)

# EUROPÄISCHE PATENTANMELDUNG

(21) Anmeldenummer: **87104019.2**

(22) Anmeldetag: **18.03.87**

(51) Int. Cl.4: **A23B 7/148**

(30) Priorität: **19.03.86 HU 115186**

(43) Veröffentlichungstag der Anmeldung:
**28.10.87 Patentblatt 87/44**

(84) Benannte Vertragsstaaten:
**AT DE FR**

(71) Anmelder: **AGROBER MEZÖGAZDASAGI ES ELELMISZERIPARI TERVEZÖ BERUHAZASI VALLALAT**
**Budafoki ùt 79**
**HU-1117 Budapest(HU)**

(72) Erfinder: **Ratkovics, Peter, Dipl.-Ing.**
**Csaba u. 7/a**
**H-1122 Budapest(HU)**
Erfinder: **Pfeningberger, Otto, Dipl.-Ing.**
**Gerinc u. 1.**
**H-1221 Budapest(HU)**
Erfinder: **Ratkovics, Ferenc, Dr. Dipl.Chem.**
**Kisfaludy u. 30.**
**H-8200 Veszprém(HU)**
Erfinder: **Orban, Robert, Dr. Dipl.-Landw.**
**Verecke u. 110.**
**H-1025 Budapest(HU)**
Erfinder: **Parragi, Laszloné Maria, Dr. Dipl.Chem.**
**Viktor Hugo u. 17.**
**H-8200 Veszprém(HU)**
Erfinder: **Szalai, Istvan, Dr. Dipl. Phys.**
**Egry Jozsef u. 15.**
**H-8200 Veszprém(HU)**

(74) Vertreter: **Görg, Klaus et al**
**Hoffmann, Eitle & Partner Arabellastrasse 4**
**(Sternhaus)**
**D-8000 München 81(DE)**

(54) **Einrichtung zur Lagerung von Waren, insbesondere von Obst, bzw. Pflanzen in einem konditionierten Lagerraum.**

(57) Die Erfindung betrifft eine Einrichtung zur Lagerung von Waren, insbesondere von Obst bzw. Pflanzen in einem konditionierten Lagerraum, die eine mit Temperaturfühler betätigte Kühl-Heizeinheit und ein die Feuchtigkeit einstellendes Gerät aufweist. Das Weser der Erfindung liegt darin, dass die Einrichtung als ein bewegbarer, mit einer aufschliessbarer Tür (4) versehener, in der geschlossenen Position der Tür (4) gasdichter Kontainer ausgestaltet ist, dessen Gehäuse (1) mit einer Lufttrenneinheit - vorzugsweise mit einer Brenneinheit (19) - , einer Einheit zum Kohlendioxydentzug (17) mit einem Druckausgleicher (15), sowie einem Kohlendioxydgehalt-Fühler (29), einem Sauerstoff-Fühler (30) und einem Feuchtigkeit-Fühler (31) versehen ist, ferner eine aufgrund der Signale der Fühler die Funktion der Einheiten (19, 17, 15) regelnde Temperatur-Steuereinheit (32) und eine Gaszusammensetzung-Steuereinheit (33) aufweist.

# EINRICHTUNG ZUR LAGERUNG VON WAREN, INSBESONDERE VON OBST, BZW. PFLANZEN IN EINEM KONDITIONIERTEN LAGERRAUM

Die Erfindung betrifft eine Einrichtung zur Lagerung von Waren, insbesondere von Obst bzw. Pflanzen in einem konditionierten Lagerraum.

Es ist in der Praxis bekannt, dass die Voraussetzung der Lagerfähigkeit des langfristig zu lagern beabsichtigten Obstes, so Apfel, Trauben usw. in der Sicherstellung einer entsprechenden gasförmigen Umgebung - einerseits mit entsprechender Temperatur, anderseits entsprechender Zusammensetzung - besteht. In der Abhängigkeit des zu lagern beabsichtigten Produkts muss das Gas eine von der Luft jedenfalls abweichende Zusammensetzung aufweisen und ausser Stickstoff und Sauerstoff auch Kohlendioxyd enthalten. Auf diese Weise, während in der Luft Stickstoff in einem Verhältnis zu etwa 78 vol.%, Edelgase zu 1 vol.% und Sauerstoff zu 21 vol.% vorhanden sind und die Menge des Kohlendioxyds vernachlässigt werden kann, beansprucht die Lagerfähigkeit z.B. von Apfeln das Vorhandensein eines Gases in dem Lagerraum, das im allgemeinen 94 vol.% Stickstoff, 3 vol.% Sauerstoff und 3 vol.% Kohlendioxyd enthält. Gleichzeitig muss womöglich die Temperatur auf einem konstanten Wert behalten werden, und darf keinesfalls unter 0°C abfallen oder 10°C übertreffen. Desweiteren muss man dafür sorgen, dass in dem Lagerraum die relative Feuchtigkeit im Bereich zwischen 70 und 95 % liege.

Im Sinne der bisher gefolgten Praxis pflegte man das zu lagern gewünschte Produkt, z.B. Apfel nach dem Pflücken in einzelne Kühlhäuser mit einem grösseren Lagerraum zu transportieren, wo die die Temperatur und eventuell auch den Feuchtigkeitsinhalt betreffenden Forderungen befriedigt worden sind, aber für einen Gasraum entsprechender Zusammensetzung in der Mehrheit der Fälle nicht gesorgt ist. Bei einem grossen Luftraum stellt die Gewährleistung der be friedigenden Verhältnisse immer eine schwer realisierbare und kostaufwendige Aufgabe dar, u.a. auch darum, da die die Objekte mit einem grossen Luftraum begrenzenden Wände nicht luftdicht sind; Kühlhäuser werden meistens aus Ziegel oder Beton gebaut, durch die Risse deren Gas und Luft durchdringen können, auch die Wärmeisolierung beansprucht einen zusätzlichen Arbeitsgang. Obzwar in der letzten Zeit ein Kühlhaus gebaut wurde, dessen Wand aus wärmeisolierenden und luftdichten Paneelen zusammengebaut ist, die Luftdichtigkeit aber konnte bei den Stossstellen nicht erreicht werden.

Ausser den obenerwähnten Umständen ist die Qualität der zu lagern beabsichtigten Ware auch dadurch weitgehend gefährdet, dass die Kühlhäuser in grösseren Entfernungen voneinander liegen, so beansprucht der Transport der Ware zu dem Bestimmungsort einen längeren Weg. Das unvermeidbare Schadhaftwerden während des Transports, Ein-, Aus-und Umladungen verringerte die Substanz und dadurch den Wert der Ware in einem bedeutenden Masse. Anlässlich der immer nur teilweise erfolgenden Einladung und Ausladungen änderten sich auch Temperatur, Luftfeuchtigkeit und Zusammensetzung des gesamten Gasraums des Kühlhauses, die Häufigkeit derartiger Tätigkeiten hatte die Qualität der Ware weiter beeinträchtigt.

Zur Vermeidung der erwähnten schadhaften Einflüsse wurde der Erfindung das Ziel gesetzt, eine Einrichtung zu schaffen, durch welche die Qualität und Intaktheit der zu lagern gewünschten Ware langfristig und mit höchster Sicherheit bewahrt werden können.

Die Erfindung beruht auf der Erkenntnis, dass die gestellte Aufgabe gelöst werden kann, wenn für die Lagerung und Gewährleistung der atmosphärischen Bedingungen kleinere, leicht bewegbare, gasdichte Lagerungs-Einheiten verwendet werden, die in der Nähe des Zuchtorts zugänglich sind, von dort mit jedwelchem Transportmittel weitergefördert werden können, und in denen die Ware bis zum Zeitpunkt des jeweiligen Verbrauchs ohne etwaige Umladung belassen werden kann.

Das Wesen der Erfindung liegt also darin, dass die Einrichtung zur Lagerung von Waren, insbesondere Obst bzw. Pflanzen als ein, leicht bewegbares und mit einer abschliessbaren Ladeöffnung versehenes, mit gasdichten Wänden umschlossenes Gehäuse ausgebildet ist; dessen Abmessungen eines standarisierten Warenbehälters (Kontainers) aufweist, das ausser der auf Wirkung des Temperaturfühlers betätigten Heiz-, Kühl-und Benetzungsvorrichtung mit einer zur Umwandlung des in der Luft enthaltenen Sauerstoffes dienenden Brenneinheit (z.B. mit einem mit PB-Gas gespeisten katalytischen Brenner), mit einer von dem Kohlendioxyd befreienden Einheit (z.B. mit einem Adsorber), mit einem Druckausgleicher als Zubehör, desweiteren mit Fühlern zur Wahrnahme des Kohlendioxydgehalts, des Sauerstoffgehalts und des Feuchtigkeitsgehalts versehen ist, sowie mit einer Temperatur-Steuereinheit und einer Gaszusammensetzung-Steuereinheit versehen ist.

Gemäss der Erfindung ist die gasdichte Wandung des Gehäuses durch eine zweischichtige schalartige Kunststoffwand gebildet, in der eine intermediäre Wärmeisolierschicht angeordnet ist. Mit der doppelten Kunststoffwand wird ein einziges homogenes Gehäuse ausgestaltet, an dem nur eine sich luftdicht - schliessende Tür und gleicherweise gut abgedichtete Öffnungen zur Aufnahme der Verkabelung und Rohrleitungen ausgestaltet sind.

Im Sinne einer vorteilhaften Ausführung ist das Gehäuse statisch steif und selbsttragend aufgebaut, aber es besteht die Möglichkeit es mit einer separaten Tragkonstruktion zu umschliessen. Durch den Umstand, dass die doppelte synthetische Wand aus dem gleichen Werkstoff (und beide aus einem einzigen Stück) hergestellt ist, und so die gleiche Wärmeausdehnungseigenschaften usw. aufweist, wird die Gefahr der durch die Temperaturdifferenzen hervorgerufenen Risse eliminiert. Als Erfolg, dass es selbsttragend ist, kann das Gehäuse als eine einzige Einheit auf die verschiedensten Fahrzeuge umgeladen werden, wodurch eine separate Umladung der Ware sich erübrigt. Die Fühler, Bestandteile und Steuereinheiten sichern automatisch die vorgeschriebenen Bedingungen im Bezug Temperatur, Feuchtigkeit und Gaszusammensetzung innerhalb des Gehäuses. Selbst das mit den Sauerstoff-und Kohlendioxydfühlern verbundene, vorzugsweise die Gaszusammensetzung registrierende Steuereinheit besteht z.B. aus einem A/D-Umwandler, aus einem mit ROM-Programm versehenen Mikroprozessor, einem D/A-Umwandler, einem Leistungsverstärker und einer ausführenden Regelautomatik und ist zur Steuerung verschiedener Technologien nach von aussen her einspeisbaren, aufgrunde wählbarer Zielfunktionen optimalisierten Programmen geeignet.

Der erforderliche elektrische Strom kann durch die Stromquelle des transportierenden Fahrzeugs, an der Stelle der dauerhaften Lagerung durch das elektrische Netz eingespeist werden.

Von dem Zeitpunkt der Einlagerung bis zum Verbrauch bleibt die Ware unberührt in dem Gehäuse, so kann das Produkt seinen gesunden und intakten Zustand dauerhaft bewahren; der aus dem beseitigten Schadhaftwerden der Ware stammende Gewinn amortisiert binnen Kurzem die Kosten der Einrichtung.

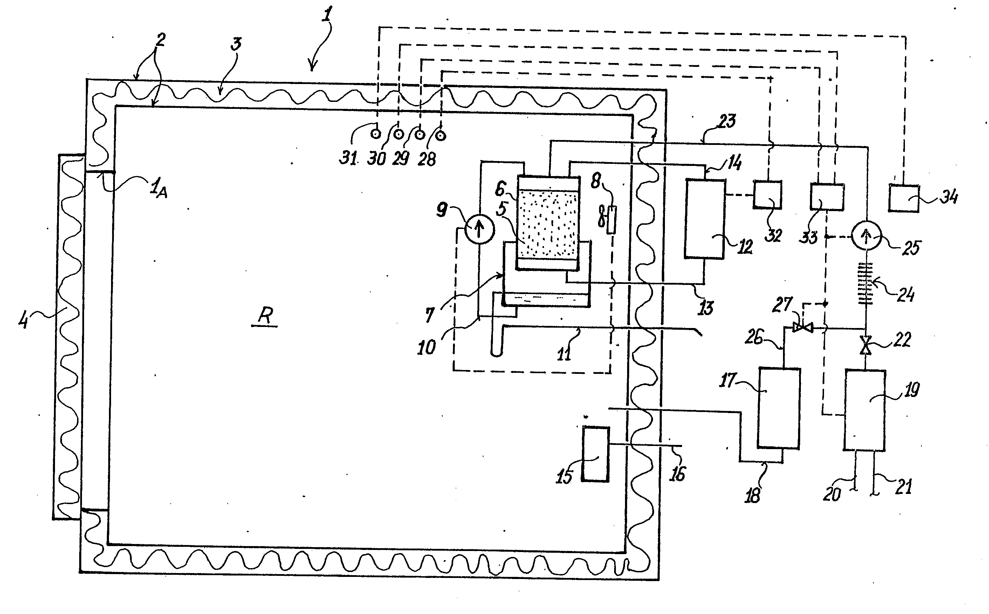

Die erfindungsgemässe Einrichtung wird anhand einer vorteilhaften Ausführung, mit Hilfe der beiliegenden Zeichnung näher erläutert.

Die Zeichnung veranschaulicht das als Beispiel dienende Funktionsschema der Einrichtung, unter Angabe der zur Funktion erforderlichen strukturellen Beziehungen im Zusammenhang mit dem Lagerraum der Einrichtung.

Wie es aus der Figur wohl ersichtlich ist, ist die erfindungsgemässe Lager-Einrichtung als ein kontainerartiges Gehäuse 1 mit einer Doppelwand 2 ausgebildet, wobei ein Zwischenraum der Wändeschichten mit einer Wärmeisolierschicht 3 ausgefüllt ist. Das Gehäuse 1 ist mit einer Ladeöffnung 1A versehen, die mit einer Tür 4 gasdicht abschliessbar ist. Innerhalb des Gehäuses 1 ist ein Lagerraum R ausgebildet, und ein mit einer Benetzungsfläche 5 ausgestalteter Wärmeaustauscher 6 mit einem darunter sich befindenden Wasserbehälter 7 angeordnet. Auch hier ist ein den Gasstrom gewährleistender Ventilator 8 angebracht. In dem Innenraum des Gehäuses 1 ist noch ein Druckausgleicher 15 angeordnet, der mit dem Aussenraum über einen Rohrstutzen 16 kommuniziert. Der in dem Wasserbehälter 7 vorhandene Wasserüberschuss wird über ein Überlaufrohr 11 ins Freie abgeleitet.

Zur Benetzung der Benetzungsfläche 5 (Befeuchtungsfläche) wird Wasser aus dem Wasserbehälter 7 über eine mit einer Pumpe 9 versehenen Rohrleitung 10 zugeleitet. In dem Innenraum sind noch die Fühler 28 bzw. 29 bzw. 30 zur Wahrnahme der Temperatur, bzw. des Sauerstoffgehalts bzw. der Feuchtigkeit angeordnet.

Bei der dargestellten Ausführungsform ist ausserhalb des Gehäuses 1 eine ansich bekannte Kühl-und Heizeinheit 12 angeordnet, die mit dem Wärmeaustauscher 6 mittels Rohrleitungen 13, 14 verbunden ist. Hier sind noch eine Einheit zum Kohlendioxydentzug 17 und eine (z.B. mit PB-Gas ge-speiste) katalytische Brenneinheit 19 angeordnet. Die Einheit zum Kohlendioxydentzug 17 ist mit dem Lagerraum R des Gehäuses 1 über ein Gasausfuhrrohr 18 verbunden. Eine Luftrohrleitung 20 und eine das PB-Gas zuführende Rohrleitung 21 münden in die Brenneinheit 19, anderseits ist daraus eine mit einem Ventil 22, Kühlrippen 24 und einem Ventilator 25 versehene Haputrohrleitung 23 - die zu dem Wärmeaustauscher 6 führt - abgeleitet. Ferner mündet eine mit einem Ventil 27 versehene, aus der Einheit zum Kohlendioxydentzug 17 ausgeleitete Rohrleitung 26 in die Hauptleitung 23 ein. Zuletzt sind ausserhalb des Gehäuses 1 die einzelnen (in diesem Falle registrierenden)Steuereinheiten angeordnet, nämlich eine Temperatur-Steuereinheit 32, eine Gaszusammensetzung-Steuereinheit 33, sowie eine Feuchtigkeit registrierendes Instrument 34.

Die Wirkungsweise der erfindungsgemässen Einrichtung ist, wie folgt:

Was die Temperatur des Lagerraums R anbelangt, kann diese den gewünschten Wert (eingestellten Soll-Wert) unter-oder überschreiten. Die Temperatur wird aufgrund des Signals des Temperaturfühlers 28 von der Temperatur-Steuereinheit 32 wahrgenommen, und sollte die Abweichung die angegebene Toleranzgrenze überschreiten, aktiviert sie - in Abhängigkeit des Sinnes der Abweichung - die Kühl-und Heizeinheit 12 in der Kulh-oder Heizbetriebsweise, weiterhin werden die Zirkulation des Lagerraumes R sichernder Ventilator 8 und die wasserfördernde Pumpe 9 in Gang gesetzt.

Die Pumpe 9 fördert Wasser aus dem Wasserbehälter 7 über die Rohrleitung 10 auf die Benetzungsfläche 5 und behält diese in einem nassen Zustand. Diese Aktivität wird solange fortgesetzt, bis die Temperatur in dem Lagerraum R den Soll-Wert erreicht.

Nun stellt die Temperatur-Steuereinheit 32 aufgrund des Signals des Temperaturfühlers 28 die Funktion des Wärmeaustauschers 6, des Ventilators 8 und der Pumpe 9 ab, und hält diese Einheiten solange ausser Betrieb, bis die Temperatur des Lagerraums R mit dem Soll-Wert innerhalb der angegebenen Toleranzgrenze übereinstimmt. Sowohl die gewünschte Temperatur, als die Toleranzgrenze können an der Temperatur-Steuereinheit 32 im Einklang mit den Eigenartigkeiten der gelagerten Ware eingestellt werden.

Die Gaszusammensetzung des Lagerraums R kann gleicherweise in mehreren Richtungen von dem Soll-Wert abweichen. Demnach muss das zur Regelung der Gaszusammensetzung dienende System auch verschiedenerweise betätigt werden.(Der Anfangszustand kann als ein Extremfall betrachtet werden.) Wenn nun der Lagerraum R mit Waren z.B. Obstsorten aufgefüllt wird, enthält die Luft in dem Lagerraum R 21 vol.% Sauerstoff, 0 vol.% Kohlendioxyd und 79 vol.% Stickstoff (die Edelgase in einer Menge von 1 vol.% werden aus diesem Standpunkt mit dem Stickstoff zusammen in Betracht genommen). Demgegenüber beansprucht die Lagerung der meisten Obste und des Grünzeugs einen Gasraum, der 2 - 6 vol.% Sauerstoff, 2 - 6 vol.% Kohlendioxyd und 88 - 96 vol.% Stickstoff enthält.

Auf diese Weise, wenn der Lager mit Waren aufgefüllt wird, ist in dem Lagerraum R ein Sauerstoffüberschuss vorhanden, während Kohlendioxyd und Stickstoff zu wenig sind.

In solchem Falle aktiviert die Gaszusammensetzung-Steuereinheit 33 (die das Signal des Temperaturfühlers 29 und des Kohlendioxydgehalt-Fühlers 30 empfängt, und die die Vorauswahl mehrerlei technologischer Programme und die vorangehende Einstellung der gewünschten Gaszusammensetzung und der zugelassenen Toleranz erlaubt) dem gewählten Ziel entsprechend, das die Gaszusammensetzung regelnde System. Eine der Zielsetzungen besteht hier z.B. in der schnellen Verringerung des Sauerstoffgehalts, und zwar so, dass eine die wünschenswerte übertreffende Konzentration des Kohlendioxydgehalts provisorisch zugelassen wird. Es ist aber auch möglich, die schnelle Einstellung des Kohlendioxydgehalts als Ziel zu setzen, wobei provisorisch ein den Soll-Wert überschreitender Sauerstoffgehalt zugelassen wird. Eine weitere Zielsetzung kann z.B. in dem minimalen Verbrauch des Heizmittels bestehen usw. Zur Erläuterung der Wirkungsweise der erfindungsgemässen Einrichtung wählen wir nun die technologische Version bei der die Herabsetzung des Sauerstoffgehalts als Ziel gesetzt wird.

In diesem Falle setzt die die Gaszusammensetzung-Steuereinheit 33 durch Schliessen des Ventils 27 und Öffnen des Ventils 22, sowie durch den Anlass des Ventilators 25 und Inbetriebsetzung der Brenneinheit 19 die Regelung der Gaszusammensetzung in Gang.

Die theoretische Zusammensetzung des die Brenneinheit 19 verlassenden Abgases - bei der Verbrennung 1 Mol (51 g PB-Gas) - beträgt

$$O_2 = 0,0 \text{ Mol} \qquad 0,0 \text{ Vol.\%}$$
$$CO_2 = 3,5 \text{ Mol} \qquad 11,8 \text{ Vol.\%}$$
$$H_2O = 4,5 \text{ Mol} \qquad 15,2 \text{ Vol.\%}$$
$$N_2 = 21,7 \text{ Mol} \qquad 73,0 \text{ Vol.\%}$$

$$\text{Insgesamt: } 29,7 \text{ Mol} \qquad 100,0 \text{ Vol.\%}$$

Zwecks Vermeidung der Entstehung des Kohlenmonoxyds muss jedoch die Brenneinheit 19 mit einem Luftüberschuss von mindestens 5 % betrieben werden, so wird das Abgas - da die Verbrennung 1 Mol PB-Gas 27,4 Mol Luft beansprucht - , 0,05 X 27,4 = 1,4 Mol Luft enthalten. So gestaltet sich die Zusammensetzung des Abgases in der Praxis auf die folgende Weise:

| | | | |
|---|---|---|---|
| $O_2$ | = | 0,3 Mol | 1,0 Vol.% |
| $CO_2$ | = | 3,5 Mol | 11,3 Vol.% |
| $H_2O$ | = | 4,5 Mol | 14,5 Vol.% |
| $N_2$ | = | 22,8 Mol | 73,2 Vol.% |
| Insgesamt: | | 31,1 Mol. | 100,0 Vol.% |

Das warme Abgas wird in der mit den Kühlrippen 24 versehenen Haputrohrleitung 23 vorgekühlt, aber noch immer warm, mittels des Ventilators 25 auf die Oberfläche des Wärmeaustauschers 6 eingeblasen. Auf Wirkung der Erwärmung werden alle Elemente des Kühlsystems (auf die bereits beschriebene Weise) eingeschaltet.

Der Wassergehalt des Abgases stellt sich an der Benetzungsfläche 5 auf einen der Temperatur der Kühlfläche entsprechenden Sättigungswert ein, wonach die überflüssige Wassermenge sich niederschlagend in den Wasserbehälter 7 abtropft.

Mit Hinsicht darauf, dass die Temperatur der Benetzungsfläche 5 zwangsmässig gewissermassen unter der im dem Lagerraum R gewünschten Temperatur liegt, bleibt in dem Abgas nur soviel Feuchtigkeit zuruck, die in dem Lagerraum R einer 85 - 95 %-igen relativen Sättigung entspricht. Dieser Wert stellt eben den einzuhalten beabsichtigten Wert dar.

Nehmen wir an, dass das Abgas auf 3°C abgekühlt wird, nach erfolgter Abtrennung des Wasserüberschusses, wird durch die Verbrennung von 1 Mol PB-Gas auf die beschriebene Weise ein Gasgemisch der folgenden Zusammensetzung in den Lagerraum R gelangen

| | | | |
|---|---|---|---|
| $O_2$ | = | 0,3 Mol | 1,1 Vol.% |
| $CO_2$ | = | 3,5 Mol | 13,1 Vol.% |
| $H_2O$ | = | 0,2 Mol | 0,8 Vol.% |
| $N_2$ | = | 22,8 Mol | 85,0 Vol.% |
| Insgesamt: | | 26,8 Mol | 100,0 Vol.% |

Die Menge des abgeschiedenen Wassers beträgt 4,3 Mol (77,4 g). Der Überschuss wird über das Überlaufrohr 11 ins Freie abgelassen. Während der Ventilator 25 Gase in den Lagerraum R einbläst und der Druck in dem Lagerraum R sich erhöht, tritt aus dem der jeweiligen Zusammensetzung entsprechenden Gasgemisch durch den Druckausgleicher 15 aus dem Lagerraum R soviel Gas aus, dass der Druck mit dem atmosphärischen Druck annähernd übereinstimme.

Die Steuereinheiten sind solange im Betrieb, bis der Sauerstofffühler 30 die Abnahme des Sauerstoffgehalts in dem Lagerraum R anzeigt (d.h. der Soll-Wert erreicht ist). Nun stellt die Gaszusammensetzung-Steuereinheit 33 die Funktion der Brenneinheit 19 und des Ventilators 25 ab, und schliesst das Ventil 22. Das die Temperatur regelnde System wird erst dann abgestellt, wenn sich die Temperatur des Lagerraums R auf den gewünschten Wert (Soll-Wert) einstellt.

Während der Lagerung der Ware, während der Lagerraum R des Gehäuses 1 gasdicht abgeschlossen ist, z.B. wenn Obst gelagert wird, verbraucht der Nachreifungsprozess des Obstes Sauerstoff, gleichzeitig wird Kohlendioxyd erzeugt.

Die Reaktion läuft folgenderweise ab:

Obst + $O_2$ = Oxydiertes Obst + $CO_2$

Eine gute Lager-Einrichtung kann dadurch gekennzeichnet werden, dass darin die Reaktion verlangsamt wird, trotzdem produziert eine Tonne Obst (z.B. Apfel) etwa 50 - 100 g Kohlendioxyd pro Tag, wozu 35 - 70 g Sauerstoff verbraucht wird. So nimmt während der Lagerung in dem Lagerraum R der Sauerstoff ständig ab und gleichzeitig Kohlendioxyd erzeugt wird, als Erfolg wird nach einer gewissen Zeitspanne wenig Sauerstoff, aber zu viel Kohlendioxyd vorhanden sein, während der Stickstoffgehalt sich überhaupt nicht ändert.

Wenn die die Gaszusammensetzung-Steuereinheit 33 es wahrnimmt, dass der Ist-Wert des Sauerstoffgehaltes in dem Lagerraum R den Soll-Wert unterschreitet, überprüft sie es, ob der Gehalt an Kohlendioxyd niedrig, hoch oder eben geeignet ist.

Sollte das Kohlendioxydgehalt zu hoch sein, entweder infolge der Nachreifung oder der früheren Betätigung der Brenneinheit 19, wird der Prozess des Kohlendioxydentzuges in Gang gesetzt. Der Prozess findet hier so statt, indem das Ventil 27 geöffnet und der Ventilator 25 angelassen werden, der über die Einheit zum Kohlendioxydentzug 17 (z.B. über einen Adsorber) das Gas aus dem Lagerraum R des Gehäuses 1 absaugt; nachdem der Kohlendioxyd entfernt ist, wird das Gas über die Haputrohrleitung 23 in den Lagerraum R zurückgeleitet.

Sollten die tatsächliche bzw. erforderte Zusammensetzung des Gases in dem Lagerraum R die folgenden sein:

$$
\begin{array}{ll}
\text{Zusammensetzung} & \text{Zusammensetzung} \\
\text{(Ist-Wert)} & \text{(Soll-Wert)} \\
O_2 - 1{,}0 \text{ Vol.\%} & O_2 - 3{,}0 \pm 2 \text{ Vol.\%} \\
CO_2 - 10{,}0 \text{ Vol.\%} & CO_2 - 6{,}0 \pm 2 \text{ Vol.\%} \\
H_2O - 0{,}8 \text{ Vol.\%} & H_2O - 0{,}8 \pm 0{,}2 \text{ Vol.\%} \\
N_2 - 88{,}2 \text{ Vol.\%} & N_2 - 90{,}2 \pm 4{,}2 \text{ Vol.\%}
\end{array}
$$

Soll nun der Massenstrom des aus dem Lagerraum R abgesogenen Gasgemisches 100 Mol/Stunde betragen, dann entspricht der Massenstrom des aus dem Lagerraum R austretenden Gasgemisches beim Anlassen der Einheit zum Kohlendioxydentzug 17 den folgenden

$O_2 = 1$ Mol/h

$CO_2 = 10$ Mol/h

$H_2O = 0{,}8$ Mol/h

$N_2 = 88{,}2$ Mol/h

Kohlendioxyd wird in der Einheit zum Kohlendioxydentzug 17 - z.B. durch Adsorption - aus dem Gas entfernt, dementsprechend gestaltet sich der Massenstrom des von dem Ventilator 25 über die Hauptrohrleitung 23 in den Lagerraum R des Gehäuses 1 rückgeführten Gases, wie folgt:

$$
\begin{array}{lll}
O_2 &= 1{,}0 \text{ Mol/h} & 1{,}1 \text{ Vol.\%} \\
CO_2 &= 0{,}0 \text{ Mol/h} & 0{,}0 \text{ Vol.\%} \\
H_2O &= 0{,}8 \text{ Mol/h} & 0{,}9 \text{ Vol.\%} \\
N_2 &= 88{,}2 \text{ Mol/h} & 98{,}0 \text{ Vol.\%} \\
\hline
\text{Insgesamt:} & 90{,}0 \text{ Mol/h} & 100{,}0 \text{ Vol.\%}
\end{array}
$$

Mit Hinsicht darauf, dass diese Menge um 10 Mol/h weniger ist, als die abgesogene Gasmenge, wird über den Druckausgleicher 15 10 Mol Luft/h in den Lagerraum R eingelassen. Auf diese Weise beträgt die gesamte Gasmenge:

$$
\begin{array}{lll}
O_2 &= 3{,}1 \text{ Mol/h} & 3{,}1 \text{ Vol.\%} \\
CO_2 &= 0{,}0 \text{ Mol/h} & 0{,}0 \text{ Vol.\%} \\
H_2O &= 0{,}8 \text{ Mol/h} & 0{,}8 \text{ Vol.\%} \\
H_2 &= 96{,}9 \text{ Mol/h} & 96{,}9 \text{ Vol.\%} \\
\hline
\text{Insgesamt:} & 100{,}0 \text{ Mol/h} & 100{,}0 \text{ Vol.\%}
\end{array}
$$

Die Einrichtung wird solange in Betrieb gehalten, bis der Sauerstoffgehalt die obere Toleranzgrenze des Soll-Wertes erreicht, oder der Gehalt an Kohlendioxyd unter den zugelassenen Wert abfällt. Die gewünschte Gaszusammensetzung und die Grösse der zugelassenen Toleranzgrenze entscheiden, welcher der beiden Fälle zuerst eintrifft. Ob der erste, ob der zweite Fall eintrifft, stellt die Gaszusammensetzung--Steuereinheit 33 das Ausgewinnen des Kohlendioxyds ab, d.h. sie verschliesst das Ventil 27 und stellt gleichzeitig den Ventilator 25 ab.

Darauffolgend ist die Einrichtung entweder ausser Betrieb oder sie funktioniert in der Luftzufuhrbetriebsweise.

Die die Gaszusammensetzung-Steuereinheit 33 befindet sich auch im Stillstand, wenn die Konzentration sowohl des Kohlendioxyds, als auch des Sauerstoffes innerhalb der Toleranzgrenze liegt.

Wenn nun der Sauerstoffgehalt den Soll-Wert unterschreitet, aber der Kohlendioxydgehalt bis zum zugelassenen Wert verringert worden ist, und der Prozess der Kohlendioxydabsorption aus diesem Grunde abgestellt ist, muss in den Lagerraum R Luft dosiert werden. Diese Aufgabe wird durch Öffnen des Ventils 22 und über die Brenneinheit 19 so gelöst, indem PB-Gas nicht der Brenneinheit 19 zugeführt wird, sondern der Ventilator 25 über die Hauptrohrleitung 23 solange reine Luft in den Lagerraum R fördert, bis der Sauer stoffgehalt die zulässige Toleranzgrenze erreicht. Das Gasgemisch - dessen Volumen jenem der in den Lagerraum R zugeführten Luftmenge entspricht - tritt über den Druckausgleicher 15 aus dem Lagerraum R aus. Infolge des stattfindenden Prozesses nimmt der Gehalt an Kohlendioxyd gewissermassen ab, eine separate Regelung ist daher nicht erforderlich, da das Obst sowieso etwa 50 - 100 g Kohlendioxyd je Tonne und je Tag produziert und etwa 35 - 70 g Sauerstoff verbraucht. So nimmt das Kohlendioxyd während der Lagerung ständig zu. Die die Gaszusammensetzung-Regeleinheit 33 stellt die Luftzufuhr durch Abstellen des Ventilators 25 und Schliessen des Ventils 22 ab.

Wenn der Sauerstoffgehalt früher die obere Toleranzgrenze erreicht, als das Kohlendioxyd bis zur unteren Grenze des Soll-Wertes sich verringert, setzt die die Gaszusammensetzung-Steuereinheit 33 das die Gaszusammensetzung regelnde System provisorisch ausser Betrieb, und wartet darauf, dass infolge der Nachreifung des Obstes der Sauerstoffgehalt bis zu der unteren Toleranzgrenze abnimmt, und die Kohlendioxydkonzentration zunimmt. Darauffolgend kann der Prozess der Kohlendioxydadsorption wieder in Gang gesetzt werden.

Zusammenfassend, kann es festgestellt werden, dass das die Gaszusammensetzung regelnde System in dreierlei Betriebsweisen zu funktionieren fähig ist: Entfernung des Sauerstoffes über die Brenneinheit 19; Entfernung des Kohlendioxyds mittels der Einheit zum Kohlendioxydentzug 17, und zuletzt Erhöhung des Sauerstoffgehalts durch Einblasen der reinen Luft wiederum über die abgeschaltete Brenneinheit 19.

Die Gaszusammensetzung-Steuereinheit 33 wählt aus den erwähnten Betriebsweisen, der im voraus eingestellten Ziel funktion gemäss die erforderliche Intervention aus, und setzt in Gang bzw. stellt die Einrichtung aufgrund des von dem Kohlendioxydgehalt-Fühler 29 oder dem Sauerstoff--Fühler ankommenden Signals ab.

Wie es aus den Obigen hervorgeht, kann unter Anwendung der erfindungsgemässen Einrichtung, mit einer zum Erreichen des gesetzten Ziels vorteilhaftesten Technologie, die sich nach den, in der Abhängigkeit der Eigenartigkeiten der gelagerten Ware gewählten Zielfunktionen ändert, äusserst wirtschaftlich die optimale Gasumgebung erzeugt und aufrechterhalten werden. Die Möglichkeit dazu bieten das die Optimalisierung durchführende Steuersystem und die technische Lösung, insoweit, dass mit der erfindungsgemässen Einrichtung zum Erreichen der gewünschten Gaszusammensetzung - grösstenteils während der Lagerungsdauer - das in dem Lagerraum vorhandene Gas selbst verwendet werden kann und nur eine geringe Menge der Aussenluft zu ersetzen ist. Das bedeutet, dass zur Aufrechterhaltung des richtigen Verhältnisses in der Mehrheit der Fälle ein Gas verwendet wird, das in der Hinsicht der Zusammensetzung viel näher zu der gewünschten Zusammensetzung liegt, als die Aussenluft. Dabei ist der Vorteil unschätzbar, der sich daraus ergibt, dass die gelagerte Ware während des Transports nicht beschädigt wird und nicht zugrunde geht.

Der guten Ordnung halber soll es bemerkt werden, dass auch von den hier dargestellten, als Beispiel dienenden Versionen abweichende Lösungen realisiert werden können, so z.B. kann anstatt der mit PB-Gas betätigten katalytischen Brenneinheit 19 eine auf Adsorption beruhende, luftabscheidende Einheit eingesetzt werden. Darüber hinaus kann als die Einheit zum Kohlendioxydentzug 17 anstatt des Kohlendioxydadsorbers auch ein Absorber verwendet werden.

Die erfindungsgemässe Einrichtung ist nicht nur zur Lagerung von ein grosses Volumen beanspruchenden Waren, wie z.B. Apfel, geeignet, sondern auch für Trauben und sonstiges Obst, und auch für die Frischhaltung, Lagerung und für den Transport von Blumen.

Es ist noch zu bemerken, dass beim dargestellten Ausführungsbeispiel die Doppelwand 2 des kontainer-artigen Gehäuses 1 aus zwei Kunststoff-Raumelementen ausgebildet sind, wobei der Zwischenraum mit der Wärmeisolierschicht 3 ausgefüllt ist. Es ist aber auch eine solche Ausführung möglich, bei welcher die wandungsbildende Raumelemente aus mehreren, gasdicht aneinander befestigbaren Elementen zusammengebaut werden. Alle Einheiten des Reguliersystems der Einrichtung sind an der Stirnseite des Gehäuses 1 befestigt, demzufolge die Einrichtung komplett lieferbar ist.

**Ansprüche**

1. Einrichtung zur Lagerung von Waren, insbesondere von Obst bzw. Pflanzen in einem konditionierten Lagerraum, die eine mit Temperaturfühler betätigte Kühl--Heizeinheit und ein die Feuchtigkeit einstellendes Gerät aufweist, dadurch **gekennzeichnet,** dass sie als ein bewegbarer, mit einer aufschliessbaren Tür (4) versehener, in der geschlossenen Position der Tür (4) gasdichter Kontainer ausgestaltet ist, dessen Gehäuse (1) mit einer Lufttrenneinheit - vorzugsweise mit einer Brenneinheit (19) - , einer Einheit zum Kohlendioxydentzug (17), mit einem Druckausgleicher (15), sowie einem Kohlendioxydgehalt-Fühler (29), einem Sauerstoff-Fühler (30) und einem Feuchtigkeit-Fühler (31) versehen ist, ferner eine aufgrund der Signale der Fühler die Funktion der Einheiten (19, 17, 15) regelnde Temperatur-Steuereinheit (32) und eine Gaszusammensetzung-Steuereinheit (33) aufweist.

2. Einrichtung nach Anspruch 1, dadurch **gekennzeichnet,** dass das Gehäuse (1) des Kontainers eine - schalenartig monolitisch ausgebildete Doppelwand (2) aufweist, zwischen deren Schichten eine Wärmeisolierschicht (3) angeordnet ist.

3. Einrichtung nach Anspruch 1 oder 2, dadurch **gekennzeichnet,** dass die die Gaszusammensetzung--Steuereinheit (33) ausserhalb des Lagerraumes (R) des Gehäuses (1) angeordnet ist, und zur Prozesssteuerung mit Regelungsmöglichkeit geeignet ausgestaltet ist.

4. Einrichtung nach einem der Ansprüche 1 bis 3, dadurch **gekennzeichnet,** dass die Temperatur-Steuereinheit (32) und die Gaszusammensetzung-Steuereinheit (33) mit je einem Datenregistergerät versehen sind.